# EUROPEAN PATENT APPLICATION

(11) **EP 4 787 491 A1**
(43) Date of publication of application: **05.08.2026**
(21) Application number: 24850313.8
(22) Date of filing: 24.12.2024
(51) Int. Cl.: H01M 4/58, H01M 4/136, C01B 25/45, H01M 10/054, C01B 32/05, H01M 10/54, H01M 10/0525, H01M 4/1397

(54) **POSITIVE ELECTRODE MATERIAL, PREPARATION METHOD THEREFOR, POSITIVE ELECTRODE PLATE AND SODIUM ION BATTERY**

(30) Priority: 20.12.2024 CN 202411900736
(71) Applicant: Hubei Wanrun New Energy Technology Co., Ltd., Shiyan, Hubei 442500 (CN)
(72) Inventor: WANG, Qin, Shiyan, Hubei 442500 (CN); PENG, Tangping, Shiyan, Hubei 442500 (CN); TAO, Lijuan, Shiyan, Hubei 442500 (CN); LV, Fei, Shiyan, Hubei 442500 (CN)
(74) Representative: Studio Torta S.p.A.
(86) International application number: PCT/CN2024/141949
(87) International publication number: WO 2026/129388

(57) **Abstract**

Provided is a cathode material, a preparation method therefor, a cathode sheet and a sodium-ion battery. The cathode material comprises sodium iron phosphate fluoropyrophosphate, and the molecular formula of the sodium iron phosphate fluoropyrophosphate is NaₘFe₃(PO₄)ₚ(P₂O₇)_{q}F_{w}, wherein 5.02 ≤ m ≤ 5.05, 4.02 ≤ p+2q ≤ 4.05, 0.5p ≤ q ≤ 0.55p, 1.01 ≤ w ≤ 1.05, and 1.87 ≤ p ≤ 2.05. The cathode material has low impurity content, high sphericity and excellent morphology of microscopic particles, exhibiting excellent electrochemical performance.

## Description

### Technical Field

The present disclosure relates to the technical field of sodium ion battery technology, specifically to a cathode material, a preparation method therefor, a cathode sheet, and a sodium ion battery.

### Background

Due to the constraints caused by the scarcity of lithium resources on the development of lithium-ion batteries, sodium ion batteries are currently considered to be one of the powerful alternatives, especially in the field of power batteries for new energy vehicles. However, the most commonly used iron-based sodium ion battery cathode material currently has significant room for improvement in the performance, especially in terms of electrochemical activity and stability. It is necessary to carry out more precise composition, purity optimization, and morphology design for the iron-based sodium ion battery cathode material.

At the same time, the resource utilization and recycling of discarded lithium iron phosphate have received increasing attention with a sharp increase in the scrap amount of lithium iron phosphate batteries. A conventional chemical treatment method for the discarded lithium iron phosphate is to dissolve chemically, remove impurities, and extract lithium after removing iron and phosphorus. This process has the disadvantages of high cost, low added value of the product, especially the low added value of phosphorus and iron elements, large amount of wastewater generation, and low utilization rate of elements. Although there are already preparation methods for lithium iron phosphate cathode materials using waste lithium iron phosphate batteries in the existing technology, impurity removal effects of the overall routes are poor, and the resulting cathode materials generally have more impurities and poor performance.

For the above-mentioned reasons, one of the important technical problems that need to be solved in this field is how to provide a sodium ion battery cathode material with high phase purity and excellent morphology based on the resource utilization of a discarded lithium iron phosphate, so as to exhibit high electrochemical activity and stability.

### Summary

The main objective of the present application is to provide a cathode material, a preparation method therefor, a cathode sheet, and a sodium ion battery, in order to solve the problem of difficult preparation of a sodium ion battery cathode material with excellent morphology, good electrochemical activity and stability based on resource utilization of a discarded lithium iron phosphate in the existing technology.

To achieve the above-mentioned objective, a first aspect of the present application provides a cathode material, wherein the cathode material comprises sodium iron phosphate fluoropyrophosphate, and the molecular formula of the sodium iron phosphate fluoropyrophosphate is NaₘFe₃(PO₄)ₚ(P₂O₇)_{q}F_{w}, wherein 5.02 ≤ m ≤ 5.05, 4.02 ≤ p+2q ≤ 4.05, 0.5p ≤ q ≤ 0.55p, 1.01 ≤ w ≤ 1.05, and 1.87 ≤ p ≤ 2.05.

The cathode material with a unique chemical element composition provided in the present application, can significantly improve the energy density of a corresponding sodium ion battery as a cathode material with excellent performance, while maintaining good cycle stability and excellent rate performance of the battery. Especially with the introduction of fluorine element, which has stronger electronegativity, and can improve the voltage plateau of the cathode material, and at the same time play a role in anion doping, thereby further enhancing the ion conductivity of the obtained cathode material.

Furthermore, the cathode material further comprises sodium iron phosphate, and a mass fraction of the sodium iron phosphate in the cathode material is ≤ 1.1%. By controlling the content of sodium iron phosphate in the cathode material, the electrochemical performance of the cathode material can be further optimized, as sodium iron phosphate is an electrochemically inert substance, and reducing the content of the sodium iron phosphate can improve capacity, cycle life, and safety. More preferably, in an XRD pattern of the cathode material, the main peak height H₁ of the sodium iron phosphate fluoropyrophosphate and the main peak height H₂ of the sodium iron phosphate impurity satisfy: H₂/H₁ ≤ 1.5%. The above-mentioned cathode material provided in the present application exhibits superior electrochemical performance due to its high purity characteristic, which in turn leads to higher capacity and stronger long cycle stability when applied to a sodium ion battery.

In some preferred embodiments, a sphericity of the cathode material is 0.94-0.99. The inventors have optimized the sphericity of the cathode material through extensive experiments, resulting in a nearly circular microstructure that exhibits better electrode contact performance. At the same time, a cathode material with high sphericity have shorter and more uniform migration distances for sodium ions, better electrolyte infiltration, and better particle size distribution (due to better fluidity, facilitating mutual embedding between particles of different sizes), effectively improving the charging efficiency and discharging efficiency of the sodium ion battery where the cathode material is applied in.

A second aspect of the present application provides a preparation method for a cathode material, which includes: providing a discarded lithium iron phosphate cathode material; dissolving the discarded lithium iron phosphate cathode material to obtain a pretreated filter residue; mixing the pretreated filter residue with a solution of pyrophosphoric acid to obtain a first filtrate; mixing the first filtrate with a precipitant to obtain a second filtrate; mixing the second filtrate with a pH regulator, a ferrous iron source, and an oxidant to obtain a third filtrate and a third filter residue; performing adsorption treatment on the third filtrate to obtain an adsorption residual solution; mixing the adsorption residual solution, the third filter residue, a sodium source, a phosphorus source, and a fluorine source to obtain a mixed slurry; and grinding, drying and calcining the mixed slurry sequentially to obtain the cathode material.

The above-mentioned preparation method of the present application prepares the cathode material as described above by recycling the discarded lithium iron phosphate cathode material, which not only effectively reduces the production cost of the cathode material, but also realizes the recycling of a waste battery material, and has significant environmental benefits. The prepared cathode material has excellent electrochemical performance, which can significantly improve the energy density and cycle stability of the sodium ion battery, providing strong support for the commercial application of the sodium ion battery. At the same time, the obtained cathode material has stable performance and can meet the application needs of the sodium ion battery in large-scale energy storage systems.

Furthermore, in the step of dissolving the discarded lithium iron phosphate cathode material to obtain the pretreated filter residue, an alkaline agent is used to dissolve the discarded lithium iron phosphate cathode material; and/or the step of mixing the pretreated filter residue with the solution of pyrophosphatic acid to obtain the first filtrate includes: mixing the pretreated filter residue with the solution of pyrophosphatic acid, and after a first reaction time at a first reaction temperature, performing a first solid-liquid separation treatment to obtain the first filtrate; and/or the step of mixing the first filtrate with the precipitant to obtain the second filtrate includes: mixing the first filtrate with the precipitant, and after a second reaction time at a second reaction temperature, performing a second solid-liquid separation treatment to obtain the second filtrate; and/or the step of mixing the second filtrate with the pH regulator, the ferrous iron source, and the oxidant to obtain the third filtrate and the third filter residue includes: mixing the second filtrate with the pH regulator, the ferrous iron source, and the oxidant, and after reaching an endpoint pH value of a third reaction and then a third reaction time, performing a third solid-liquid separation treatment to obtain the third filtrate and the third filter residue; and/or the step of the adsorption treatment includes: using an ion exchange resin to perform the adsorption treatment to the third filtrate.

On the basis of the above-mentioned process flow, the specific procedures are further optimized to more accurately control the reaction conditions during the recycling and reprocessing process, such as reaction temperature, reaction time, and endpoint pH value, so as to more effectively remove impurities from the discarded battery material and significantly improve the purity and electrochemical performance of the final cathode material, making it more suitable for a sodium ion battery with high energy density.

Furthermore, a mass ratio of the alkaline agent to the discarded lithium iron phosphate cathode material is (3-5):1; a ratio of an amount of substance of phosphate to pyrophosphate in the first filtrate is 1:(0.45-0.49); a ratio of an amount of substance of the precipitant to a total amount of substance of nickel ions, cobalt ions, copper ions, and zinc ions in the first filtrate is (1.2-1.5):1; a ratio of an amount of substance of iron element in the ferrous iron source to an amount of substance of pyrophosphate in the second filtrate is (0.95-0.98):1; and a ratio of an amount of substance of Na, Fe, P, and F in the mixed slurry is (5.02-5.05):3:(4.02-4.05):(1.01-1.05).

By optimizing the mass relationship and a ratio of the amount of substance in each step, the recovery rate of the discarded iron lithium cathode material can be further improved. At the same time, the purity of the obtained cathode material can be optimized, the electrochemical performance of the obtained cathode material can be improved, making its application in the sodium ion battery more extensive.

Furthermore, a concentration of the alkaline agent is 3 mol/L-5 mol/L; a concentration of the solution of pyrophosphatic acid is 3 mol/L-5 mol/L; a mass fraction of Al element in the pretreated filter residue is less than 0.1%; and a Li⁺ concentration in the adsorption residual solution is less than 100 ppm.

During the preparation process, optimizing the concentration of raw materials and controlling the component content of the obtained product are beneficial for producing a cathode material with high purity and stability, reducing the performance degradation of the cathode material during the charging and discharging processes, and extending the service life of a corresponding sodium ion battery.

Furthermore, a first reaction temperature is 70°C-90°C, and a first reaction time is 1 h-2 h; a second reaction temperature is 40°C-60°C, and a second reaction time is 30 min-60 min; an endpoint pH value of the third reaction is 2.8-3.2, and a third reaction time is 30 min-60 min; and a temperature for the calcination is 550°C-650°C, and a temperature-holding time for the calcination is 10 h-13 h.

Controlling the reaction conditions in the above-mentioned steps is beneficial to significantly optimize the crystal structure and morphology of the obtained cathode material, thereby improving its electrochemical performance and ultimately enhancing the cycle performance and energy density of a corresponding sodium ion battery.

Furthermore, the alkaline agent is a sodium hydroxide solution; the precipitant is selected from one or more of sodium sulfide, sodium hydrogen sulfide, and sodium N,N-dimethyldithiocarbamate; the pH regulator is selected from one or more of sodium hydroxide, ammonia water, ammonium bicarbonate, and ammonium carbonate; the ferrous iron source is selected from one or more of ferrous acetate, ferrous citrate, and ferrous gluconate; and the oxidant is selected from one or more of hydrogen peroxide, oxygen, and ozone.

On a preferred basis of the reaction steps, reaction conditions, and dosage relationships mentioned above, suitable chemical reagents are further selected for different steps to optimize the preparation process, comprehensively improve the various properties of the cathode material, and enhance the electrical performance of a corresponding sodium ion battery.

A third aspect of the present application provides a cathode sheet comprising the above-mentioned cathode material, or the cathode material prepared by the above-mentioned preparation method for the cathode material. Due to the superior morphology, higher phase purity, and fewer impurities of the cathode material obtained in the present application, a corresponding cathode sheet also has superior electrochemical performance.

A fourth aspect of the present application provides a sodium ion battery comprising the above-mentioned cathode sheet. Due to the excellent microstructure and extremely high phase purity of the above-mentioned sodium iron phosphate fluoropyrophosphate cathode material obtained in the present application, when applied as a cathode sheet component in a sodium ion battery, the obtained sodium ion battery also has comprehensively improved electrochemical performance, especially in terms of initial discharging capacity and cycle stability.

The foregoing description is merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### Brief Description of the Drawings

To describe the technical solution of the present application more clearly, the following briefly describes the accompanying drawings used in the present application. Apparently, the accompanying drawings in the following descriptions show merely some embodiments of the present application, and those of ordinary skill in the art may still derive other drawings from the accompanying drawings without creative efforts.
FIG. 1 is an SEM result diagram of the cathode material obtained in Example 1;
FIG. 2 is an XRD pattern of Examples 1 to 3.

### Detailed Description of the Embodiments

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; and the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple plates" refers to two or more (including two) plates.

In the description of the embodiments of the present application, unless otherwise specified, a solvent used for "solution", "filtrate", etc. is water, preferably at least one of distilled water, deionized water, pure water, and ultrapure water.

As described in the background, there is a problem of difficult preparation of a sodium ion battery cathode material with excellent morphology, good electrochemical activity and stability based on resource utilization of a discarded lithium iron phosphate in the existing technology. To solve the above-mentioned technical problems, a first aspect of the present application provides a cathode material, wherein the cathode material comprises sodium iron phosphate fluoropyrophosphate, and the molecular formula of the sodium iron phosphate fluoropyrophosphate is NaₘFe₃(PO₄)ₚ(P₂O₇)_{q}F_{w}, wherein 5.02 ≤ m ≤ 5.05, 4.02 ≤ p+2q ≤ 4.05, 0.5p ≤ q ≤ 0.55p, 1.01 ≤ w ≤ 1.05, and 1.87 ≤ p ≤ 2.05.

The cathode material with unique chemical element composition provided in the present application, can significantly improve the energy density of a corresponding sodium ion battery as a cathode material with excellent performance, while maintaining good cycle stability and excellent rate performance of the battery. Especially with the introduction of fluorine element, which has stronger electronegativity, and can improve the voltage plateau of the cathode material, and at the same time play a role in anion doping, thereby further enhancing the ion conductivity of the obtained cathode material.

Furthermore, 5.02 ≤ m ≤ 5.05, 2.0 ≤ p ≤ 2.01, 1.01 ≤ q ≤ 1.02, and 1.01 ≤ w ≤ 1.05.

Furthermore, the molecular formula of the sodium iron phosphate fluoropyrophosphate in the cathode material is Na_{5.03}Fe₃(PO₄)_{2.0}(P₂O₇)_{1.02}F_{1.03}, Na_{5.02}Fe₃(PO₄)_{2.0}(P₂O₇)_{1.01}F_{1.01} or Na_{5.05}Fe₃(PO₄)_{2.01}(P₂O₇)_{1.01}F_{1.05}.

Furthermore, the cathode material further comprises sodium iron phosphate, and a mass fraction of the sodium iron phosphate in the cathode material is ≤ 1.1%, specifically 0.14%, 0.21%, 0.23%, 0.24%, 0.25%, 0.46%, 0.98%; preferably 0.1%-1.01%; further preferably 0.10%-0.5%; and still further preferably 0.10%-0.23%. By controlling the content of sodium iron phosphate in the cathode material, the electrochemical performance of the cathode material can be further optimized, capacity, cycle life, and safety can be improved.

Furthermore, in an XRD pattern of the cathode material, the main peak height H₁ of the sodium iron phosphate fluoropyrophosphate and the main peak height H₂ of the sodium iron phosphate impurity satisfy: H₂/H₁ ≤ 1.5%, specifically 0.2%, 0.3%, 0.4%, 0.42%, 0.45%, 0.46%, 0.57%, 1.22%, preferably 0.2%-1.22%, further preferably 0.2%-0.36%, and still further preferably 0.2%-0.4%. The above-mentioned cathode material provided in the present application exhibits superior electrochemical performance due to its high purity characteristic, which in turn leads to higher capacity and stronger long cycle stability when applied to a sodium ion battery.

In some preferred embodiments, a sphericity of the cathode material is 0.94-0.99, specifically 0.945, 0.946, 0.961, 0.968, 0.969, 0.972, 0.974, 0.985, preferably 0.945-0.99, further preferably 0.96-0.99, and still further preferably 0.97-0.99. The inventors have optimized the sphericity of the cathode material through extensive experiments, resulting in a nearly circular microstructure that exhibits better particle contact performance and electrolyte infiltration, effectively improving the charging and discharging efficiency of the sodium ion battery where the cathode material is applied in.

Furthermore, a powder resistivity of the cathode material is 30 Ω cm-76 Ω·cm, such as 32 Ω cm, 33 Ω cm, 56 Ω·cm, 59 Ω·cm, 63 Ω cm, 65 Ω cm, and 69 Ω cm, preferably 30 Ω cm-65 Ω cm, and more preferably 30 Ω cm-60 Ω cm. A specific surface area is 12.0 m²/g-17.5 m²/g, such as 12.1 m²/g, 12.3 m²/g, 12.7 m²/g, 12.9 m²/g, 16.8 m²/g, and 17.3 m²/g. A compact density is 2.15 g/mL-2.25 g/mL, such as 2.15 g/mL, 2.16 g/mL, 2.17 g/mL, 2.20 g/mL, 2.21 g/mL, 2.22 g/mL, 2.23 g/mL, and 2.25 g/mL.

Furthermore, the cathode material also comprises carbon element, and the mass fraction of the carbon element in the cathode material is 1.54%-2.2%, such as 1.56%, 1.59%, 1.61%, 1.62%, 1.63%, 2.14%, 2.19%, etc.

Furthermore, the cathode material comprises a core and a carbon coating layer, with the carbon coating layer covering the core. The core comprises the sodium iron phosphate fluoropyrophosphate, or alternatively, the core comprises the sodium iron phosphate fluoropyrophosphate and the sodium iron phosphate.

Furthermore, a mass fraction of the carbon coating layer in the cathode material is 1.54%-2.2%. For example, it can be 1.56%, 1.59%, 1.61%, 1.62%, 1.63%, 2.14%, 2.19%, etc.

Furthermore, under the condition of 25°C, a first charging specific capacity of the cathode material at a rate of 0.2 C is greater than or equal to 112 mAh/g, preferably 112 mAh/g-122 mAh/g, and more preferably 115 mAh/g-122 mAh/g. For example, it can be 112.4 mAh/g, 113.5 mAh/g, 115.4 mAh/g, 118.2 mAh/g, 118.5 mAh/g, 118.9 mAh/g, 120.1 mAh/g, 120.4 mAh/g, 121.7 mAh/g, etc.

Furthermore, under the condition of 25°C, a first discharging specific capacity of the cathode material at a rate of 0.2 C is greater than or equal to 103 mAh/g, preferably 103 mAh/g-114 mAh/g, and more preferably 106 mAh/g-114 mAh/g. For example, it can be 103.2 mAh/g, 104.1 mAh/g, 106.3 mAh/g, 107.2 mAh/g, 109.6 mAh/g, 110.3 mAh/g, 110.6 mAh/g, 111.8 mAh/g, 113.4 mAh/g, etc.

Furthermore, under the condition of 25°C, a first discharging median voltage of the cathode material at a rate of 0.2 C is greater than or equal to 3.18 V, preferably 3.15 V-3.35 V, and more preferably 3.2 V-3.32 V. For example, it can be 3.18 V, 3.21 V, 3.23 V, 3.25 V, 3.26 V, 3.27 V, 3.32 V, etc.

Furthermore, under the condition of 25°C, a first discharging specific capacity of the cathode material at a rate of 1 C is greater than or equal to 101 mAh/g, preferably 101 mAh/g-110 mAh/g, and more preferably 105 mAh/g-110 mAh/g. For example, it can be 101.8 mAh/g, 103.6 mAh/g, 105.2 mAh/g, 106.8 mAh/g, 107.5 mAh/g, 108.1 mAh/g, 108.6 mAh/g, 109.1 mAh/g, 109.5 mAh/g, etc.

Furthermore, under the condition of 25°C, a capacity retention rate of the cathode material after 500 of charging and discharging cycles at a rate of 1 C is greater than or equal to 97.5%, preferably 97.5%-99%, and more preferably 98%-99%. For example, it can be 97.5%, 97.6%, 98%, 98.3%, 98.6%, 98.7%, 98.9%, etc.

In some embodiments, the above-mentioned first charging specific capacity, first discharging specific capacity, and first discharging median voltage of the cathode material are all obtained by preparing a cathode sheet with the cathode material, which is assembled to form a button cell and tested.

The cathode sheet comprises a cathode active material, a binder, and a conductive agent. The cathode active material is a lithium supplement as previously described. The preferred binder is PVDF (polyvinylidene fluoride), and other bonding materials suitable for a cathode sheet can also be used. The preferred conductive agent is carbon conductive material, for example, conductive carbon black (SP), etc. The above-mentioned cathode active material, binder, and conductive agent are proportioned in an appropriate mass ratio, an aluminum plate is used as a current collector, a mass ratio of the cathode active material, binder, and conductive agent for preparing the cathode sheet can be 85:7:8, and a compact density of a mixture of the cathode active material, binder, and conductive agent can be 2.2 g/mL.

A second aspect of the present application provides a preparation method for a cathode material, which includes: providing a discarded lithium iron phosphate cathode material; dissolving the discarded lithium iron phosphate cathode material to obtain a pretreated filter residue; mixing the pretreated filter residue with a solution of pyrophosphoric acid to obtain a first filtrate; mixing the first filtrate with a precipitant to obtain a second filtrate; mixing the second filtrate with a pH regulator, a ferrous iron source, and an oxidant to obtain a third filtrate and a third filter residue; performing adsorption treatment on the third filtrate to obtain an adsorption residual solution; mixing the adsorption residual solution, the third filter residue, a sodium source, a phosphorus source, and a fluorine source to obtain a mixed slurry; and grinding, drying and calcining the mixed slurry sequentially to obtain the cathode material.

The above-mentioned preparation method of the present application prepares the cathode material as described above by recycling the discarded lithium iron phosphate cathode material, which not only effectively reduces the production cost of the cathode material, but also realizes the recycling of a waste battery material, and has significant environmental benefits. The prepared cathode material has excellent electrochemical performance, which can significantly improve the energy density and cycle stability of the sodium ion battery, providing strong support for the commercial application of the sodium ion battery. At the same time, the obtained cathode material has stable performance and can meet the application needs of the sodium ion battery in large-scale energy storage systems.

Furthermore, in the step of dissolving the discarded lithium iron phosphate cathode material to obtain the pretreated filter residue, an alkaline agent is used to dissolve the discarded lithium iron phosphate cathode material.

Furthermore, the step of mixing the pretreated filter residue with the solution of pyrophosphatic acid to obtain the first filtrate includes: mixing the pretreated filter residue with the solution of pyrophosphatic acid, and after a first reaction time at a first reaction temperature, performing a first solid-liquid separation treatment to obtain the first filtrate.

Furthermore, the step of mixing the first filtrate with the precipitant to obtain the second filtrate includes: mixing the first filtrate with the precipitant, and after a second reaction time at a second reaction temperature, performing a second solid-liquid separation treatment to obtain the second filtrate.

Furthermore, the step of mixing the second filtrate with the pH regulator, the ferrous iron source, and the oxidant to obtain the third filtrate and the third filter residue includes: mixing the second filtrate with the pH regulator, the ferrous iron source, and the oxidant, and after reaching an endpoint pH value of a third reaction and then a third reaction time, performing a third solid-liquid separation treatment to obtain the third filtrate and the third filter residue.

Furthermore, the step of the adsorption treatment includes: using an ion exchange resin to perform the adsorption treatment to the third filtrate.

The above-mentioned method provided in the present application can effectively utilize the iron, phosphorus and other elements in the discarded lithium iron phosphate cathode material, and at the same time utilize sodium element therein, to obtain a cathode material with relatively high added value and excellent performance for a sodium ion battery, with low sewage generation and good environmental protection. Specifically, in the process of the alkaline agent dissolution, aluminum element is mainly removed by the alkaline agent. Taking NaOH as an example, the following reaction occurs: NaOH+Al+H₂O→NaAlO₂+H₂. The remaining pretreated filtrate obtained by filtration is mainly a sodium-containing solution, to which pyrophosphatic acid is added. Pyrophosphate has strong coordination and acidity, making it easier to dissolve lithium iron phosphate, while other impurities such as carbon are filtered out due to insolubility. Meanwhile, due to the absence of an oxidant in the alkaline dissolution step of the present application, some inactive metals such as copper are not easily dissolved and are therefore easily removed by filtration. During this process, the following reactions mainly occur: LiFePO₄+0.5H₄P₂O₇→Li⁺+Fe²⁺+H₂PO₄²⁻+0.5P₂O₇⁴⁻. The first filtrate obtained by filtering the first reaction solution mainly contains elements such as lithium, iron, and phosphorus,and a precipitant (such as sodium sulfide, sodium hydrogen sulfide, sodium N,N-dimethyldithiocarbamate, etc.) is added to remove heavy metals from the first filtrate. The above-mentioned sulfides are selected as precipitants because heavy metals such as nickel, cobalt, copper, and zinc ions react with sulfur ions to obtain insoluble sulfide precipitates, and the pH value when precipitation occurs is relatively low. At the same time, the reducibility of sulfides can reduce a small amount of trivalent iron ions, thus avoiding the oxidation of ferrous iron to form iron phosphate precipitates, which is beneficial for reducing the loss of iron and phosphorus. After the reaction between the first filtrate and the precipitant, a second reaction solution is obtained, and after the second reaction solution is filtered, a second filtrate from which heavy metals have been removed is obtained. Add a pH regulators (such as sodium hydroxide, ammonia water, ammonium bicarbonate, and ammonium carbonate), ferrous iron sources (such as ferrous acetate, ferrous citrate, and ferrous gluconate), and oxidants (such as hydrogen peroxide, oxygen, and ozone) to the second filtrate to react and obtain iron phosphate/ferrous phosphate and iron pyrophosphate/ferrous pyrophosphate. The iron element, the anions such as phosphate and pyrophosphate in the second filtrate are precipitated to obtain the third filter residue, thereby separating from the lithium ions in the third filtrate (a lithium-containing solution, where cations in the solution are mainly lithium ions), providing a basis for the subsequent adsorption and recovery of lithium element. The adsorption residual solution obtained by further adsorbing and recovering lithium ions from the third filtrate is mixed with the third filter residue, and the third filter residue is used as an iron source, and further supplemented with sodium source, phosphorus source, and fluorine source to prepare sodium iron phosphate fluoropyrophosphate as a cathode material.

Compared with traditional preparation processes, the above-mentioned recovering preparation method provided in the present application has a shorter process flow and higher recovery rates for each element. In an aqueous solution formed by the third filtrate, the mixture of sodium, iron, and phosphorus elements is more uniform than a solid-phase method, resulting in a better morphology, higher purity, and superior performance of the cathode material obtained.

Specifically, in the above-mentioned method provided in the present application, for the dissolution process of lithium iron phosphate, pyrophosphatic acid is used, which has stronger acidity and can be used at a higher concentration compared to phosphoric acid (a mass fraction of pyrophosphatic acid in a solution of the pyrophosphatic acid can reach 95%, while a mass fraction of phosphoric acid in a solution of phosphoric acid is generally only 80%). Meanwhile, pyrophosphatic acid can provide pyrophosphate for the cathode material obtained in the present application, which is beneficial for the cathode material to have fewer impurities, higher purity, and higher phase purity. Compared to some solid-phase processes that use phosphate to convert and prepare sodium iron phosphate pyrophosphate, the purity of the cathode material prepared in the present application is higher. Because the process of converting phosphate to pyrophosphate phosphate requires complete occurrence at a certain temperature, otherwise a certain amount of non-electrochemically active impurity sodium iron phosphate phase will be generated, resulting in high impurity phase and low electrical performance of the final cathode material product. As mentioned above, the present application does not require the conversion of phosphate to pyrophosphate, thus avoiding the generation of sodium iron phosphate impurity phase. The resulting cathode material has lower impurities and higher phase purity, resulting in better electrochemical performance.

At the same time, using pyrophosphatic acid to dissolve lithium iron phosphate can fully utilize anions without producing other salts, which is beneficial for avoiding the cost increase and element recovery rate reduction caused by separating other impurities. Moreover, using pyrophosphatic acid to dissolve lithium iron phosphate can effectively avoid the generation of other waste, has good environmental protection, high recovery rate of various elements, and correspondingly increases the purity of the cathode material obtained by re-batching and calcination, with excellent electrochemical performance.

Compared with the traditional process of first preparing lithium iron phosphate waste into iron phosphate and lithium carbonate, and then mixing iron phosphate with sodium sources for sintering, the above-mentioned process provided in the present application is shorter, lower in cost, generates less wastewater, and the resulting cathode material has better performance.

Furthermore, when the pH regulator is sodium hydroxide, the preferred concentration of the sodium hydroxide solution is 5 mol/L-10 mol/L.

Furthermore, the ferrous iron source can be mixed with the second filtrate in the form of a solution, and the concentration of ferrous iron element in the ferrous iron source is preferably 1.5 mol/L-2.5 mol/L.

Furthermore, the oxidant is selected from at least one of hydrogen peroxide, oxygen, and ozone.

Furthermore, a concentration of an alkali solution used for the dissolution of the alkaline agent is 3 mol/L-5 mol/L; a mass ratio of the alkali solution to the discarded lithium iron phosphate cathode material is (3-5):1, which is beneficial for effectively improving the dissolution efficiency of aluminum in the discarded lithium iron phosphate cathode material, reducing the generation of by-products, and thus improving the purity of the obtained cathode material.

Furthermore, a mass fraction of Al element in the pretreated filter residue is less than 0.1%.

Furthermore, the preparation method for the cathode material also includes introducing CO₂ into the pretreated filtrate and obtaining aluminum hydroxide. That is, in the present application, aluminum element is leached through the alkaline agent, and then carbon dioxide is introduced into the pretreated filtrate to further reduce impurities in the pretreated filtrate while converting a small amount of aluminum remained in the pretreated filtrate into aluminum hydroxide precipitate. The aluminum hydroxide precipitate can be used as a catalyst carrier to achieve resource utilization. The reaction that occurs during this process is: 2NaAlO₂+CO₂+3H₂O→2Al(OH)₃+Na₂CO₃.

Furthermore, a concentration of the solution of pyrophosphatic acid is 3 mol/L-5 mol/L. At this concentration, the coordination and acidity of the solution of the pyrophosphoric acid are more suitable, which is conducive to efficiently dissolving lithium iron phosphate and achieving effective element extraction.

Furthermore, a reaction temperature of the first reaction is 70°C-90°C, and a reaction time is 1 h-2 h, in order to facilitate the more complete dissolution of lithium iron phosphate and improve the recovery rate of various elements, especially Fe element.

Furthermore, a ratio of an amount of substance of phosphate to pyrophosphate in the first filtrate is 1:(0.45-0.49), in order to facilitate the formation of sodium iron phosphate fluoropyrophosphate with higher phase purity during the subsequent process of calcining to obtain the cathode material, improve its electrochemical performance.

Furthermore, in order to enhance the removal efficiency of heavy metal ions and improve the purity and electrochemical performance of the obtained cathode material, preferably, a ratio of an amount of substance of the precipitant to a total amount of substance of nickel ions, cobalt ions, copper ions, and zinc ions in the first filtrate is (1.2-1.5):1.

Furthermore, a reaction temperature of the second reaction is 40°C-60°C, and the time of the second reaction is 30 min-60 min. The preferred pH value for the second reaction is 1.8-2.5. The selection of the above-mentioned reaction conditions is beneficial for more effectively removing impurity metal ions, improving the purity of the obtained cathode material, and enhancing the cycle stability of a corresponding sodium ion battery.

Furthermore, in order to more efficiently precipitate the iron element, and the anions such as phosphate and pyrophosphate in the second filtrate, improve the purity of the obtained third filtrate, and more effectively reduce impurities, increase phase purity, and improve electrochemical performance in the obtained cathode material, a preferred endpoint pH value of a third reaction is 2.8-3.2. And, in the third reaction, after reaching the endpoint pH value of the third reaction, the reaction was further performed for 30 min-60 min.

Furthermore, a ratio of an amount of substance of iron element in the ferrous iron source (such as ferrous acetate) to an amount of substance of pyrophosphate in the second filtrate is (0.95-0.98):1, which effectively reduces the generation of by-products and improves the phase purity of the cathode material.

Furthermore, the adsorption treatment includes adding the third filtrate to an ion exchange resin for adsorption treatment until a Li⁺ concentration in the adsorption residual solution is less than 100 ppm. The present application achieves the separation and adsorption of lithium element in the discarded lithium iron phosphate material through the ion exchange resin, resulting in less residual lithium element in the adsorption residual solution and higher lithium element recovery rate. The adsorption residual solution with extremely low lithium content obtained from the separation and adsorption treatment can be recovered as a solution and mixed with the third filter residue, sodium source, phosphorus source, and fluorine source to obtain a mixed slurry, thereby preparing a cathode material. The obtained cathode material has fewer impurities, higher purity and phase purity, and better electrochemical performance.

Furthermore, in the adsorption treatment, before adding the third filtrate to the ion exchange resin, the adsorption treatment also includes adjusting a pH value of the third filtrate to 5-7, and maintaining a temperature of the third filtrate at 55°C-65°C, in order to achieve the best adsorption effect of the ion exchange resin on lithium ions in the third filtrate.

Furthermore, when adding the ion exchange resin to the third filtrate for adsorption treatment, a temperature of the adsorption treatment is 55°C-65°C, in order to maintain the adsorption effect of the ion exchange resin on lithium ions in the third filtrate.

Furthermore, the ion exchange resin is a cation exchange resin, preferably HPL900 or GC-18. And, when lithium is adsorbed onto the ion exchange resin to a lithium content of 4 g/L-6 g/L, 2 mol/L-4 mol/L sulfuric acid is added to the ion exchange resin for elution, and the resulting elution solution is precipitated to recover lithium element. The regenerated ion exchange resin after elution can be reused.

Furthermore, a ratio of an amount of substance of Na, Fe, P, and F in the mixed slurry is (5.02-5.05):3:(4.02-4.05):(1.01-1.05). The above-mentioned ratio of an amount of substance obtained through extensive experiments, combined with grinding and drying treatments, is calcined to form a cathode material with higher phase purity, better morphology, and better electrochemical performance.

In order to further improve the crystal phase purity, crystallinity, and stability of the obtained cathode material, a holding temperature for calcination is 550°C-650°C, and a temperature-holding time for calcination is 10 h-13 h. A preferred heating rate for calcination is 60°C/h-120°C/h.

In some embodiments, the sodium source may be sodium citrate and/or sodium gluconate, the phosphorus source may be phosphoric acid and/or ammonium dihydrogen phosphate, and the fluorine source may be one or more of ammonium fluoride, hydrogen fluoride, and sodium fluoride.

In the grinding process of the mixed slurry, the mixed slurry is preferably ground to a particle size of 100 nm-200 nm, and sodium hexadecylbenzenesulfonate can be added as a dispersant during the grinding process. An amount of the dispersant added can be 1%-3% of the total weight of the mixed slurry.

In a spray drying process, a particle size of the obtained spray drying material is preferably 3 µm-8 µm, and a moisture content is less than 0.5%.

During the calcination process, a roller track furnace can be used for calcination. In some embodiments, nitrogen is introduced during the calcination process for atmosphere protection. At the same time, during the temperature-holding stage, an oxygen content is less than 2 ppm, a CO content is less than 100 ppm, a CO₂ content is less than 500 ppm, and a humidity is ≤ 2% by adjusting a nitrogen introduction amount, and the calcined material is cooled to a temperature of ≤ 100°C and discharged.

In some embodiments, sieving, removing iron, and packaging the calcined material to ultimately obtain the cathode material is also included. The preferred sieve uses a 100-200 mesh ultrasonic vibrating screen, and the packaging process is performed in a constant temperature and humidity room, controlling the moisture content of the product to be ≤ 600 ppm.

A third aspect of the present application provides a cathode sheet comprising the above-mentioned cathode material, or the cathode material prepared by the above-mentioned preparation method for the cathode material. Due to the superior morphology, higher phase purity, and fewer internal impurities of the cathode material obtained in the present application, a corresponding cathode sheet also has superior electrochemical performance.

A fourth aspect of the present application provides a sodium ion battery comprising the above-mentioned cathode sheet. Due to the excellent microstructure and extremely high phase purity of the above-mentioned sodium iron phosphate fluoropyrophosphate cathode material obtained in the present application, when applied as a cathode sheet component in a sodium ion battery, the obtained sodium ion battery also has comprehensively improved electrochemical performance, especially in terms of initial discharging capacity and cycle stability.

The following provides a further detailed description of the present application in conjunction with specific embodiments, which should not be construed as limiting the scope of protection claimed by the present application.

Unless otherwise defined, all professional terms used in the following text have the same meanings as those commonly understood by those skilled in the art. The professional terms used in this article are only for the purpose of describing specific embodiments and are not intended to limit the scope of protection of the present application.

The following are some specific embodiments. It should be noted that the embodiments described below are exemplary and are intended to explain the present application and are not to be construed as limiting the present application. If specific technology or conditions are not specified in the embodiments, follow the technology or conditions described in the documents in the art or follow the product manual. The reagents or instruments used without specifying the manufacturer are conventional products that can be obtained through commercial purchase.

### I. Preparation method

### Example 1

A preparation method for a cathode material based on a discarded lithium iron phosphate cathode material:
1. A discarded lithium iron phosphate material was dissolved in an alkali solution (alkaline agent), with a mass ratio of 1:4 between the discarded lithium iron phosphate material and the alkali solution. The alkali solution was a sodium hydroxide solution with a concentration of 4 mol/L. The discarded lithium iron phosphate material was dissolved until an aluminum content in a filter residue was less than 0.1%, then the reaction was stopped, and the mixture was filtered to obtain a pretreated filtrate and a pretreated filter residue. Carbon dioxide was introduced into the pretreated filtrate to obtain aluminum hydroxide precipitate and filtrate. The aluminum hydroxide precipitate and the filtrate after filtering out the aluminum hydroxide precipitate were tested, and the results were shown in Table 1.

**Table 1**

| | | | | | | | |
|---|---|---|---|---|---|---|---|
| Aluminum hydroxide precipitat e | BET specific surface area | Main content | Apparen t density | Tap density | D50 particle size | Na | Sulfate |
| | 36.5 m²/g | 99.2% | 0.31 g/mL | 0.78 g/mL | 15.3 µm | 211 ppm | 36.4 ppm |
| Filtrate | Na | Fe | P | Ca | Mg | Al | Cu |
| | 92.7 g/L | 3.8 ppm | 1.35 g/L | 25.7 ppm | 35.8 ppm | 219 ppm | 0.2 ppm |

2. 4 mol/L pyrophosphatic acid was added to the pretreated filter residue for a first reaction, with a temperature of 80°C and a reaction time of 1.5 h, and filtered to obtain a first filtrate and a first filter residue. A ratio of the amount of substance of phosphate to pyrophosphatic acid in the first filtrate is 1:0.48.
3. Sodium sulfide (precipitant) was added to the obtained first filtrate for a second reaction. The amount of substance of sodium sulfide added to the first filtrate was 1.4 times the total amount of substance of nickel ions, cobalt ions, copper ions, and zinc ions in the first filtrate. A second reaction temperature was 50°C, and a second reaction time was 50 min. A pH value of the reaction process was maintained at 2.1. After heavy metals were precipitated during the reaction, the mixture was filtered to obtain a second filtrate and a second filter residue.
4. Sodium hydroxide (pH regulator), ferrous acetate (ferrous iron source), and an oxidant were added to the obtained second filtrate for a third reaction. A ratio of the amount of substance of ferrous acetate added to pyrophosphate in the second filtrate was 0.98:1. A pH value of the solution was adjusted by adding sodium hydroxide. A concentration of sodium hydroxide solution was 8 mol/L, a concentration of ferrous acetate solution was 2 mol/L, and the oxidant was 9 mol/L hydrogen peroxide. Stirring was performed for reacting until an endpoint pH value was 3.2, and further stirring was performed for 45 min of a third reaction time before filtering to obtain a third filtrate and a third filter residue.
5. HPL900 type weakly acidic cation exchange resin was added to the third filtrate for adsorption, with a saturated adsorption capacity of 5.5 g/L (the amount of lithium ions adsorbed by 1 L ion exchange resin). Before treatment with the ion exchange resin, sodium hydroxide was added to adjust a pH value of the third filtrate to 6.2. Then, a temperature of the third filtrate after pH adjustment was raised to 60°C. The lithium content before entering the ion exchange resin was 12.24 g/L, and an adsorption temperature was 60°C. After five consecutive ion exchange resin columns, the lithium ion concentration was reduced to 67 ppm to obtain an adsorption residual solution. The adsorption residual solution was mixed and slurried with the third filter residue to obtain a slurried material, and samples were taken to detect the concentrations of Na, Fe, P, and F. A ratio of the amount of substance of the aforementioned elements was determined to be 0.45:3:4:0.0006; sodium source (a mixture of sodium acetate and sodium citrate, with a mass ratio of 5:5), phosphorus source (ammonium dihydrogen phosphate), and fluorine source (sodium fluoride) were added separately to the slurry material to obtain a mixed slurry, and a ratio of the amount of substance of Na, Fe, P, and F in the mixed slurry material was maintained at 5.03:3:4.04:1.03.
6. The above-mentioned mixed slurry was ground until a particle size of a solid component in the mixed slurry is 130 nm. During the grinding process, a dispersant, sodium hexadecylbenzenesulfonate, was added in an amount of 2.1% of a mass of the mixed slurry. The mixed slurry after grinding was dried by spray, and nitrogen was introduced for atmosphere protection. A particle size of a spray drying material obtained was 6.2 µm, and a moisture content was less than 0.5%. The spray drying material was calcined in a roller track furnace. During the calcination process, a heating rate of a heating section was 100°C/h, and a temperature was raised to 600°C for 12 h. During the temperature-holding stage, an oxygen content was less than 2 ppm, a CO content was less than 100 ppm, a CO₂ content was less than 500 ppm, and a humidity was ≤ 2% by adjusting a nitrogen introduction amount. After calcination was completed, the calcined material was cooled to a temperature of ≤ 100°C and discharged. The sieving of the discharged material was performed using a 100 mesh ultrasonic vibrating screen. The iron removal and packaging processes were performed in a constant temperature and humidity room, and a moisture content of a final product was controlled to ≤ 600 ppm to obtain a cathode material.
7. After the ion exchange resin adsorbed lithium, the lithium content adsorbed in the ion exchange resin was 5.3 g/L. Then, 3 mol/L sulfuric acid was added for elution. The elution solution precipitated and recovered lithium, obtaining lithium carbonate with a purity higher than 98.5% (mass fraction). The regenerated ion exchange resin after elution could be used in a circular manner.

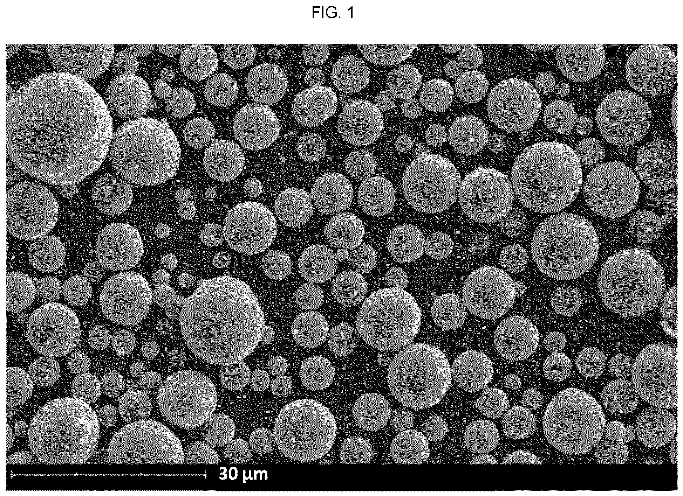

XRD testing was performed on the obtained cathode material to obtain FIG. 1. The analysis of the obtained spectrum revealed that the cathode material included sodium iron phosphate fluoropyrophosphate with a molecular formula of Na_{5.03}Fe(PO₄)_{2.0}(P₂O₇)_{1.02}F_{1.03}, as well as the sodium iron phosphate impurity with a molecular formula of NaFePO₄. A mass fraction of the sodium iron phosphate impurity in the cathode material was 0.14%.

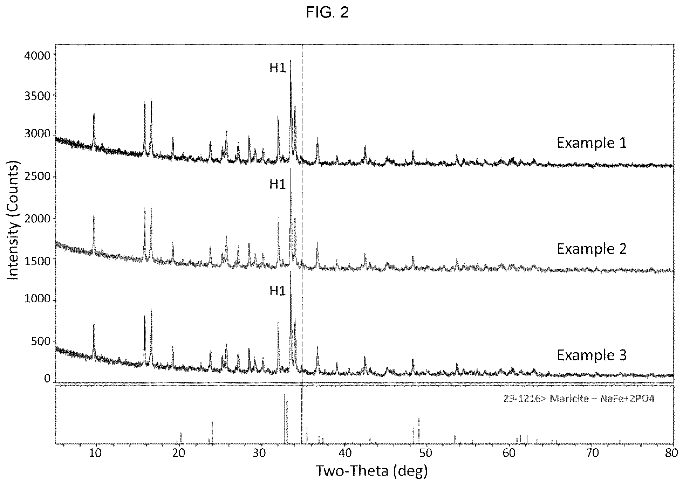

An SEM image of the obtained cathode material was shown in FIG. 1, and an XRD pattern was shown in FIG. 2.

At the same time, in an XRD pattern of the cathode material, the main peak height H₁ of the sodium iron phosphate fluoropyrophosphate and the main peak height H₂ of the sodium iron phosphate impurity satisfied H₂/H₁=0.2% (wherein the peak position of the main peak height H₂ of the sodium iron phosphate impurity was shown by the dashed line, and the main peak height H₁ of sodium iron phosphate fluoropyrophosphate had been marked).

### Example 2

A preparation method based on a discarded lithium iron phosphate cathode material:
1. A discarded lithium iron phosphate material was dissolved in an alkali solution (alkaline agent), then filtered to obtain a pretreated filtrate and a pretreated filter residue, with a mass ratio of 1:3 between the discarded lithium iron phosphate material and the alkali solution. The alkali solution was a sodium hydroxide solution with a concentration of 5 mol/L. The discarded lithium iron phosphate material was dissolved until an aluminum content in a filter residue was less than 0.1%, then the reaction was stopped. Carbon dioxide was introduced into the pretreated filtrate to obtain aluminum hydroxide precipitate and filtrate;
2. 5 mol/L pyrophosphatic acid was added to the pretreated filter residue for a first reaction, with a temperature of 70°C and a reaction time of 2 h, and filtered to obtain a first filtrate and a first filter residue. A ratio of the amount of substance of phosphate to pyrophosphatic acid in the first filtrate is 1:0.45.
3. Sodium sulfide (precipitant) was added to the obtained first filtrate for a second reaction. The amount of substance of sodium sulfide added to the first filtrate was 1.2 times the total amount of substance of nickel ions, cobalt ions, copper ions, and zinc ions in the first filtrate. A second reaction temperature was 60°C, and a second reaction time was 60 min. A pH value of the reaction process was maintained at 2.5. After heavy metals were precipitated during the reaction, the mixture was filtered to obtain a second filtrate and a second filter residue.
4. Sodium hydroxide (pH regulator), ferrous acetate (ferrous iron source), and ozone were added to the obtained second filtrate for a third reaction. A ratio of the amount of substance of ferrous acetate added to pyrophosphate in the second filtrate was 0.95:1, and a concentration of ferrous acetate solution was 1.5 mol/L. First, ozone was added to oxidize 50% of ferrous iron in the solution to trivalent iron. Then a 10 mol/L sodium hydroxide solution was added. Stirring was performed for reacting until an endpoint pH value was 2.8, and further stirring was performed for 60 min of a third reaction time before filtering to obtain a third filtrate and a third filter residue.
5. GC-18 type weakly acidic cation exchange resin was added to the third filtrate for adsorption until the lithium ion concentration decreased to 100 pm to obtain an adsorption residual solution. The adsorption residual solution was mixed and slurried with the third filter residue to obtain a slurried material, and samples were taken to detect the concentrations of Na, Fe, P, and F; sodium gluconate (sodium source), phosphoric acid (phosphorus source), and ammonium fluoride (fluoride source) were added separately to the slurried material to obtain a mixed slurry, and a ratio of the amount of substance of Na, Fe, P, and F in the mixed slurry material was maintained at 5.02:3:4.02:1.01.
6. The above-mentioned mixed slurry was ground until a particle size of a solid component in the mixed slurry is 100 nm. During the grinding process, a dispersant, sodium hexadecylbenzenesulfonate, was added in an amount of 1% of a mass of the mixed slurry. The mixed slurry after grinding was dried by spray, and nitrogen was introduced for atmosphere protection. A particle size of a spray drying material obtained was 3 µm, and a moisture content was less than 0.5%. The spray drying material was calcined in a roller track furnace. During the calcination process, a heating rate of a heating section was 60°C/h, and a temperature was raised to 550°C for 13 h. During the temperature-holding stage, an oxygen content was less than 2 ppm, a CO content was less than 100 ppm, a CO₂ content was less than 500 ppm, and a humidity was ≤ 2% by adjusting a nitrogen introduction amount. After calcination was completed, the calcined material was cooled to a temperature of ≤ 100°C and discharged. The sieving of the discharged material was performed using a 100 mesh ultrasonic vibrating screen. The iron removal and packaging processes were performed in a constant temperature and humidity room, and a moisture content of a final product was controlled to ≤ 600 ppm to obtain a cathode material.
7. After the ion exchange resin adsorbed lithium, the lithium content adsorbed in the ion exchange resin was 4 g/L. Then, 4 mol/L sulfuric acid was added for elution. The elution solution precipitated and recovered lithium. The regenerated ion exchange resin after elution was then returned for use.

XRD testing was performed on the obtained cathode material, and the results were shown in FIG. 2. The analysis of the obtained spectrum revealed that the cathode material included sodium iron phosphate fluoropyrophosphate with a molecular formula of Na_{5.02}Fe₃(PO₄)_{2.0}(P₂O₇)_{1.01}F_{1.01}, as well as the sodium iron phosphate impurity with a molecular formula of NaFePO₄. A mass fraction of the sodium iron phosphate impurity in the cathode material was 0.23%.

At the same time, in an XRD pattern of the cathode material, the main peak height H₁ of the sodium iron phosphate fluoropyrophosphate and the main peak height H₂ of the sodium iron phosphate impurity satisfied H₂/H₁=0.4% (wherein the peak position of the main peak height H₂ of the sodium iron phosphate impurity was shown by the dashed line, and the main peak height H₁ of sodium iron phosphate fluoropyrophosphate had been marked).

### Example 3

A preparation method based on a discarded lithium iron phosphate cathode material:
1. A discarded lithium iron phosphate material was dissolved in an alkali solution (alkaline agent), then filtered to obtain a pretreated filtrate and a pretreated filter residue, with a mass ratio of 1:5 between the discarded lithium iron phosphate material and the alkali solution. The alkali solution was a sodium hydroxide solution with a concentration of 5 mol/L. The discarded lithium iron phosphate material was dissolved until an aluminum content in a filter residue was less than 0.1%, then the reaction was stopped. Carbon dioxide was introduced into the pretreated filtrate to obtain aluminum hydroxide precipitate and filtrate;
2. 3 mol/L pyrophosphatic acid was added to the pretreated filter residue for a first reaction, with a temperature of 90°C and a reaction time of 1 h, and filtered to obtain a first filtrate and a first filter residue. A ratio of the amount of substance of phosphate to pyrophosphatic acid in the first filtrate is 1:0.49.
3. Sodium sulfide (precipitant) was added to the obtained first filtrate for a second reaction. The amount of substance of sodium sulfide added to the first filtrate was 1.5 times the total amount of substance of nickel ions, cobalt ions, copper ions, and zinc ions in the first filtrate. A second reaction temperature was 40°C, and a second reaction time was 30 min. A pH value of the reaction process was maintained at 1.8. After heavy metals were precipitated during the reaction, the mixture was filtered to obtain a second filtrate and a second filter residue.
4. Sodium hydroxide (pH regulator), ferrous acetate (ferrous iron source), and an oxidant were added to the obtained second filtrate for a third reaction. A ratio of the amount of substance of ferrous acetate added to pyrophosphate in the second filtrate was 0.98:1. A pH value of the solution was adjusted by adding sodium hydroxide. A concentration of sodium hydroxide solution was 10 mol/L, and a concentration of ferrous acetate solution was 2.5 mol/L. Stirring was performed for reacting until an endpoint pH value was 3.2, and further performed for 30 min of a third reaction time to obtain a third filtrate and a third filter residue.
5. HPL900 type weakly acidic cation exchange resin was added to the third filtrate for adsorption until the lithium ion concentration decreased to 100 pm to obtain an adsorption residual solution. The adsorption residual solution was mixed and slurried with the third filter residue to obtain a slurried material, and samples were taken to detect the concentrations of Na, Fe, P, and F; sodium gluconate (sodium source), ammonium dihydrogen phosphate (phosphorus source), and hydrogen fluoride (fluorine source) were added separately to the slurried material to obtain a mixed slurry, and a ratio of the amount of substance of Na, Fe, P, and F in the mixed slurry material was maintained at 5.05:3:4.05:1.05.
6. The above-mentioned mixed slurry was ground until a particle size of a solid component in the mixed slurry is 200 nm. During the grinding process, a dispersant, sodium hexadecylbenzenesulfonate, was added in an amount of 3% of a mass of the mixed slurry. The mixed slurry after grinding was dried by spray, and nitrogen was introduced for atmosphere protection. A particle size of a spray drying material obtained was 8 µm, and a moisture content was less than 0.5%. The spray drying material was calcined in a roller track furnace. During the calcination process, a heating rate of a heating section was 120°C/h, and a temperature was raised to 650°C for 10 h. During the temperature-holding stage, an oxygen content was less than 2 ppm, a CO content was less than 100 ppm, a CO₂ content was less than 500 ppm, and a humidity was ≤ 2% by adjusting a nitrogen introduction amount. After calcination was completed, the calcined material was cooled to a temperature of ≤ 100°C and discharged. The sieving of the discharged material was performed using a 200 mesh ultrasonic vibrating screen. The iron removal and packaging processes were performed in a constant temperature and humidity room, and a moisture content of a final product was controlled to ≤ 600 ppm to obtain a cathode material.
7. After the ion exchange resin adsorbed lithium, the lithium content adsorbed in the ion exchange resin was 6 g/L. Then, 4 mol/L sulfuric acid was added for elution. The elution solution precipitated and recovered lithium. The regenerated ion exchange resin after elution was then returned for use.

XRD testing was performed on the obtained cathode material, and the results were shown in FIG. 2. The analysis of the obtained spectrum revealed that the cathode material included sodium iron phosphate fluoropyrophosphate with a molecular formula of Na_{5.05}Fe₃(PO₄)_{2.01}(P₂O₇)_{1.01}F_{1.05}, as well as the sodium iron phosphate impurity with a molecular formula of NaFePO₄. A mass fraction of the sodium iron phosphate impurity in the cathode material was 0.21%.

At the same time, in an XRD pattern of the cathode material, the main peak height H₁ of the sodium iron phosphate fluoropyrophosphate and the main peak height H₂ of the sodium iron phosphate impurity satisfied H₂/H₁=0.3% (wherein the peak position of the main peak height H₂ of the sodium iron phosphate impurity was shown by the dashed line, and the main peak height H₁ of sodium iron phosphate fluoropyrophosphate had been marked).

### Example 4

A preparation method based on a discarded lithium iron phosphate cathode material:
The difference between this embodiment and Example 1 is in **steps 1 and 2**, specifically:
1. A discarded lithium iron phosphate material was dissolved in an alkali solution (alkaline agent), with a mass ratio of **1:2** between the discarded lithium iron phosphate material and the alkali solution. The alkali solution was a sodium hydroxide solution with a concentration of 4 mol/L. The discarded lithium iron phosphate material was dissolved until an aluminum content in a filter residue was less than 0.1%, then the reaction was stopped, and the mixture was filtered to obtain a pretreated filtrate and a pretreated filter residue.
2. **2 mol/L** pyrophosphatic acid was added to the pretreated filter residue for a first reaction, with a temperature of **100°C** and a reaction time of **0.5 h**, to obtain a first filtrate and a first filter residue. A ratio of the amount of substance of phosphate to pyrophosphatic acid in the first filtrate is **1:0.5**.

The remaining steps are exactly the same as in Example 1.

### Example 5

A preparation method based on a discarded lithium iron phosphate cathode material:
The difference between this embodiment and Example 1 is in **steps 1 and 2**, specifically:
1. A discarded lithium iron phosphate material was dissolved in an alkali solution (alkaline agent), with a mass ratio of **1:6** between the discarded lithium iron phosphate material and the alkali solution. The alkali solution was a sodium hydroxide solution with a concentration of 4 mol/L. The discarded lithium iron phosphate material was dissolved until an aluminum content in a filter residue was less than 0.1%, then the reaction was stopped, and the mixture was filtered to obtain a pretreated filtrate and a pretreated filter residue.
2. **6 mol/L** pyrophosphatic acid was added to the pretreated filter residue for a first reaction, with a temperature of **60°C** and a reaction time of **2.5 h**, and filtered to obtain a first filtrate and a first filter residue. A ratio of the amount of substance of phosphate to pyrophosphatic acid in the first filtrate is **1:0.4**.

The remaining steps are exactly the same as in Example 1.

### Example 6

A preparation method based on a discarded lithium iron phosphate cathode material:
The difference between this embodiment and Example 1 is in **step 3**, specifically:
3. Sodium sulfide (precipitant) was added to the obtained first filtrate for a second reaction. The amount of substance of sodium sulfide added to the first filtrate was **1** time the total amount of substance of nickel ions, cobalt ions, copper ions, and zinc ions in the first filtrate. A second reaction temperature was **65°C**, and a second reaction time was **25 min**. A pH value of the reaction process was maintained at **1.5**. After heavy metals were precipitated during the reaction, the mixture was filtered to obtain a second filtrate and a second filter residue.

The remaining steps are exactly the same as in Example 1.

### Example 7

A preparation method based on a discarded lithium iron phosphate cathode material:
The difference between this embodiment and Example 1 is in **step 3**, specifically:
3. Sodium sulfide (precipitant) was added to the obtained first filtrate for a second reaction. The amount of substance of sodium sulfide added to the first filtrate was **2** times the total amount of substance of nickel ions, cobalt ions, copper ions, and zinc ions in the first filtrate. A second reaction temperature was **35°C**, and a second reaction time was **65 min**. A pH value of the reaction process was maintained at **3.0**. After heavy metals were precipitated during the reaction, the mixture was filtered to obtain a second filtrate and a second filter residue.

The remaining steps are exactly the same as in Example 1.

### Example 8

A preparation method based on a discarded lithium iron phosphate cathode material:
The difference between this embodiment and Example 1 is in **steps 5 and 6**, specifically:
5. HPL900 type weakly acidic cation exchange resin was added to the third filtrate for adsorption, with a saturated adsorption capacity of 5.5 g/L (lithium ion content adsorbed by 1 L ion exchange resin). Before treatment with the ion exchange resin, sodium hydroxide was added to adjust a pH value of the third filtrate to 6.2. Then, a temperature of the third filtrate after pH adjustment was raised to 60°C. The lithium content before entering the ion exchange resin was 12.24 g/L, and an adsorption temperature was 60°C. After five consecutive ion exchange resin columns, the lithium ion concentration was reduced to 67 ppm to obtain an adsorption residual solution. The adsorption residual solution was mixed and slurried with the third filter residue to obtain a slurried material, and samples were taken to detect the concentrations of Na, Fe, P, and F; sodium source (a mixture of sodium acetate and sodium citrate, with a mass ratio of 5:5), phosphorus source (ammonium dihydrogen phosphate), and fluorine source (sodium fluoride) were added separately to the slurry material to obtain a mixed slurry, and a ratio of the amount of substance of Na, Fe, P, and F in the mixed slurry material was maintained at **5.00:3:4.035:1.03**.
6. The above-mentioned mixed slurry was ground until a particle size of a solid component in the mixed slurry is 130 nm. During the grinding process, a dispersant, sodium hexadecylbenzenesulfonate, was added in an amount of 2.1% of a mass of the mixed slurry. The mixed slurry after grinding was dried by spray, and nitrogen was introduced for atmosphere protection. A particle size of a spray drying material obtained was 6.2 µm, and a moisture content was less than 0.5%. The spray drying material was calcined in a roller track furnace. During the calcination process, a heating rate of a heating section was **50°C/h**, and a temperature was raised to **500°C for 14 h**. During the temperature-holding stage, an oxygen content was less than 2 ppm, a CO content was less than 100 ppm, a CO₂ content was less than 500 ppm, and a humidity was ≤ 2% by adjusting a nitrogen introduction amount. After calcination was completed, the calcined material was cooled to a temperature of ≤ 100°C and discharged. The sieving of the discharged material was performed using a 100 mesh ultrasonic vibrating screen. The iron removal and packaging processes were performed in a constant temperature and humidity room, and a moisture content of a final product was controlled to ≤ 600 ppm to obtain a cathode material.

The remaining steps are exactly the same as in Example 1.

### Example 9

A preparation method based on a discarded lithium iron phosphate cathode material:
The difference between this embodiment and Example 1 is in **steps 5 and 6**, specifically:
5. HPL900 type weakly acidic cation exchange resin was added to the third filtrate for adsorption, with a saturated adsorption capacity of 5.5 g/L (lithium ion content adsorbed by 1 L ion exchange resin). Before treatment with the ion exchange resin, sodium hydroxide was added to adjust a pH value of the third filtrate to 6.2. Then, a temperature of the third filtrate after pH adjustment was raised to 60°C. The lithium content before entering the ion exchange resin was 12.24 g/L, and an adsorption temperature was 60°C. After five consecutive ion exchange resin columns, the lithium ion concentration was reduced to 67 ppm to obtain an adsorption residual solution. The adsorption residual solution was mixed and slurried with the third filter residue to obtain a slurried material, and samples were taken to detect the concentrations of Na, Fe, P, and F; sodium source (a mixture of sodium acetate and sodium citrate, with a mass ratio of 5:5), phosphorus source (ammonium dihydrogen phosphate), and fluorine source (sodium fluoride) were added separately to the slurry material to obtain a mixed slurry, and a ratio of the amount of substance of Na, Fe, P, and F in the mixed slurry material was maintained at **5.035:3:4.00:1.03**.
6. The above-mentioned mixed slurry was ground until a particle size of a solid component in the mixed slurry is 130 nm. During the grinding process, a dispersant, sodium hexadecylbenzenesulfonate, was added in an amount of 2.1% of a mass of the mixed slurry. The mixed slurry after grinding was dried by spray, and nitrogen was introduced for atmosphere protection. A particle size of a spray drying material obtained was 6.2 µm, and a moisture content was less than 0.5%. The spray drying material was calcined in a roller track furnace. During the calcination process, a heating rate of a heating section was **150°C/h**, and a temperature was raised to **700°C for 9 h**. During the temperature-holding stage, an oxygen content was less than 2 ppm, a CO content was less than 100 ppm, a CO₂ content was less than 500 ppm, and a humidity was ≤ 2% by adjusting a nitrogen introduction amount. After calcination was completed, the calcined material was cooled to a temperature of ≤ 100°C and discharged. The sieving of the discharged material was performed using a 100 mesh ultrasonic vibrating screen. The iron removal and packaging processes were performed in a constant temperature and humidity room, and a moisture content of a final product was controlled to ≤ 600 ppm to obtain a cathode material.

The remaining steps are exactly the same as in Example 1.

### Comparative example 1

A preparation method based on a discarded lithium iron phosphate cathode material:
The difference between this comparative example and Example 1 was that sodium fluoride was not added to the obtained slurried material obtained by mixing and slurrying the adsorption residual solution and the third filter residue. A sodium source (a mixture of sodium acetate and sodium citrate, with a mass ratio of 5:5) and a phosphorus source (ammonium dihydrogen phosphate) were added to the slurried material to obtain a mixed slurry, and a ratio of the amount of substance of Na, Fe, and P in the mixed slurry material was maintained at 4.03:3:4.04. The obtained cathode material includes sodium iron phosphate pyrophosphate with a molecular formula of Na_{4.03}Fe₃(PO₄)_{1.95}(P₂O₇)_{1.045}.

### II. Testing method

### 1. Physical and chemical performance testing of the cathode material

Iron dissolution test: 1 g of a sample to be tested was added to 100 mL of hydrogen fluoride-ethanol solution with a concentration of 0.1 mol/L, stirred and dissolved at a temperature of 45°C for 30 min, and then filtered. The obtained filtrate was measured for iron element content, which was the iron dissolution amount.

The content of free sodium: determined by potentiometric titration.

Magnetic substance content: collected using a magnet, then dissolved in aqua regia and tested on an atomic absorption spectrometer.

Sphericity: tested using a sphericity analyzer and SEM.

Powder resistivity: tested using a four-probe method under a pressure of 10 MPa.

Particle size (D50 particle size): GB/T 19077, particle size analysis laser diffraction method.

Specific surface area (BET): the gas adsorption BET method was used to determine the specific surface area of solid substances.

Tap density: GB/T 5162-2021, determination of powder tap density.

Compact density: GB/T 24533, determination of powder compact density.

### 2. Button type battery performance test

The cathode materials obtained from each example and comparative example were respectively mixed with polyvinylidene fluoride and conductive carbon black in a mass ratio of 85:7:8, coated on aluminum foil, and then an electrode sheet with a compact density of 2.2 g/mL was prepared. A anode sheet used sodium plate and an electrolyte was 1 mol/L sodium perchlorate solution. The electrode sheet was assembled into a button type cell and tested a first charging specific capacity, first discharging specific capacity, and first discharging median voltage at a rate of 0.2 C; a first discharging specific capacity at 1 C; and a capacity retention rate after 500 cycles at a rate of 1 C.

The test results of the above-mentioned tests were shown in Table 2, Table 3, and Table 4, respectively.

**Table 2**

| | Peak intensity | Sphericity | Mass fraction of sodium iron phosphate/% |
|---|---|---|---|
| | H₁/H₂ | | |
| Example 1 | 0.20% | 0.985 | 0.14% |
| Example 2 | 0.40% | 0.974 | 0.23% |
| Example 3 | 0.30% | 0.972 | 0.21% |
| Example 4 | 0.42% | 0.969 | 0.25% |
| Example 5 | 0.57% | 0.961 | 0.46% |
| Example 6 | 0.46% | 0.968 | 0.24% |
| Example 7 | 0.45% | 0.961 | 0.25% |
| Example 8 | 1.22% | 0.946 | 0.98% |
| Example 9 | 0.46% | 0.945 | 1.01% |
| Comparative example 1 | 0.62% | 0.943 | 1.23% |

**Table 3**

| | Powder resistivity, Ω·cm | Specific surface area, m²/g | Compact density, g/mL | Mass fraction of carbon element, % |
|---|---|---|---|---|
| Example 1 | 56 | 12.7 | 2.25 | 1.56% |
| Example 2 | 32 | 16.8 | 2.16 | 2.14% |
| Example 3 | 33 | 17.3 | 2.15 | 2.19% |
| Example 4 | 59 | 12.9 | 2.23 | 1.59% |
| Example 5 | 63 | 12.3 | 2.21 | 1.54% |
| Example 6 | 65 | 12.1 | 2.20 | 1.63% |
| Example 7 | 69 | 12.7 | 2.22 | 1.62% |
| Example 8 | 59 | 12.9 | 2.23 | 1.61% |
| Example 9 | 76 | 12.9 | 2.17 | 1.62% |
| Comparative example 1 | 79 | 13.1 | 2.15 | 1.63% |

**Table 4**

| | 0.2C | | | 1C | |
|---|---|---|---|---|---|
| | First charging specific capacity, mAh/g | First discharging specific capacity, mAh/g | First dischargin g medium voltage, V | First discharging specific capacity, mAh/g | Capacity retention rate after 500 cycles, % |
| Example 1 | 121.7 | 113.4 | 3.32 | 109.5 | 98.9 |
| Example 2 | 120.4 | 110.6 | 3.27 | 108.6 | 98.7 |
| Example 3 | 120.1 | 111.8 | 3.26 | 109.1 | 98.9 |
| Example 4 | 118.5 | 107.2 | 3.23 | 106.8 | 98.3 |
| Example 5 | 115.4 | 106.3 | 3.21 | 105.2 | 98.0 |
| Example 6 | 118.9 | 110.3 | 3.25 | 108.1 | 98.6 |
| Example 7 | 118.2 | 109.6 | 3.23 | 107.5 | 98.3 |
| Example 8 | 113.5 | 104.1 | 3.25 | 103.6 | 97.6 |
| Example 9 | 112.4 | 103.2 | 3.18 | 101.8 | 97.5 |
| Comparative example 1 | 110.2 | 101.5 | 3.11 | 97.5 | 98.1 |

### III. Analysis of test results for various examples and comparative examples

From the results in Table 1 above, it could be seen that the present application obtained high-purity aluminum hydroxide by further precipitation treatment of the pretreated filtrate obtained from alkali dissolved discarded lithium iron phosphate cathode material. The aluminum hydroxide had a large BTE specific surface area and could be used in the field of a catalyst carrier recycling, application and catalysis. In addition, the pretreated filtrate was performed precipitation treatment to obtain a remaining filtrate, and the main component of the remaining filtrate was sodium salt, which could be mixed with the third filter residue to supplement sodium element.

From the results of Tables 2 to 4 above, it could be seen that the embodiments described in this application had achieved the preparation of a sodium ion battery cathode material with low impurity content, high purity, and high sphericity. Specifically:
Comparing Examples 1 to 9 with Comparative example 1, it can be seen that the preparation method used in the present application introduces fluoride ions to obtain a cathode material with sodium iron phosphate fluoropyrophosphate, which has superior performance. After further preparation of the sodium ion battery, the corresponding sodium ion battery exhibits higher initial charging specific capacity, initial discharging specific capacity, initial discharging median voltage, and long cycle stability, indicating that the cathode material provided in the present application has higher energy density, lower polarization, and stronger stability.

Comparing Examples 1 to 3 with Examples 4 and 5, it can be seen that in the alkali dissolution process, a preferred weight ratio of the alkali solution to the discarded lithium iron phosphate cathode material is (3-5):1, with the alkali solution concentration of 3 mol/L-5 mol/L; in the first reaction process, the preferred concentration of the solution of pyrophosphoric acid used is 3 mol/L-5 mol/L, a ratio of the amount of substance of phosphate to pyrophosphate is 1:(0.45-0.49), the first reaction temperature is controlled at 70°C-90°C, and the first reaction time is controlled at 1 h-2 h, which can effectively reduce the generation of iron sodium phosphate impurity phase, improve the sphericity of the obtained cathode material, and enhance the electrochemical performance of the cathode material, especially the cycle stability after preparing the sodium ion battery.

Comparing Examples 1 to 3 with Examples 6 and 7, it can be seen that in the process of removing the heavy metal ions in the second reaction, a ratio of the sodium sulfide (precipitant) used to a total amount of substance of nickel ions, cobalt ions, copper ions, and zinc ions in the first filtrate is (1.2-1.5):1. The second reaction temperature is 40°C-60°C, the second reaction time is 30 min-60 min, and the pH value during the second reaction process is controlled at 1.8-2.5, which is conducive to significantly improving the purity of the obtained cathode material, resulting in higher initial charging specific capacity, initial discharging specific capacity, initial discharging median voltage, and cycle stability of the corresponding sodium ion battery.

Comparing Examples 1 to 3 with Examples 8 and 9, it can be seen that a preferred ratio of the amount of substance of Na, Fe, P, and F in the mixed slurry is (5.02-5.05):3:(4.02-4.05):(1.01-1.05), and the calcination temperature during the calcination process is controlled between 550°C-650°C, with a temperature-holding time of 10 h-13 h. This is beneficial for effectively optimizing the microstructure and electrochemical performance of the obtained cathode material, and further improving the charging specific capacity, discharging specific capacity, and cycle stability of the corresponding sodium ion battery.

It should be noted that the present application is not limited to the above-mentioned embodiments. The above-mentioned embodiments are merely examples, and embodiments having substantially the same constructions and the same effects as the technical idea within the scope of the technical solutions of the present application are all included in the technical scope of the present application. In addition, without departing from the essence of the present application, various modifications made to the embodiments that can be conceived by those skilled in the art, and other manners constructed by combining some of the constituent elements in the embodiments are also included in the scope of the present application.

## Claims

1. A cathode material, wherein the cathode material comprises sodium iron phosphate fluoropyrophosphate, and the molecular formula of the sodium iron phosphate fluoropyrophosphate is NaₘFe₃(PO₄)ₚ(P₂O₇)_{q}F_{w}, wherein 5.02 ≤ m ≤ 5.05, 4.02 ≤ p+2q ≤ 4.05, 0.5p ≤ q ≤ 0.55p, 1.01 ≤ w ≤ 1.05, and 1.87 ≤ p ≤ 2.05.

2. The cathode material according to claim 1, wherein the cathode material further comprises sodium iron phosphate, and a mass fraction of the sodium iron phosphate in the cathode material is ≤ 1.1%; and
in an XRD pattern of the cathode material, the main peak height H₁ of the sodium iron phosphate fluoropyrophosphate and the main peak height H₂ of the sodium iron phosphate impurity satisfy: H₂/H₁ ≤ 1.5%.

3. The cathode material according to claim 1 or 2, wherein a sphericity of the cathode material is 0.94-0.99.

4. A preparation method for a cathode material, wherein the preparation method for the cathode material includes:
providing a discarded lithium iron phosphate cathode material;
dissolving the discarded lithium iron phosphate cathode material to obtain a pretreated filter residue;
mixing the pretreated filter residue with a solution of pyrophosphoric acid to obtain a first filtrate;
mixing the first filtrate with a precipitant to obtain a second filtrate;
mixing the second filtrate with a pH regulator, a ferrous iron source, and an oxidant to obtain a third filtrate and a third filter residue;
performing adsorption treatment on the third filtrate to obtain an adsorption residual solution;
mixing the adsorption residual solution, the third filter residue, a sodium source, a phosphorus source, and a fluorine source to obtain a mixed slurry; and
grinding, drying and calcining the mixed slurry sequentially to obtain the cathode material.

5. The preparation method for the cathode material according to claim 4, wherein in the step of dissolving the discarded lithium iron phosphate cathode material to obtain the pretreated filter residue, an alkaline agent is used to dissolve the discarded lithium iron phosphate cathode material; and/or
the step of mixing the pretreated filter residue with the solution of pyrophosphatic acid to obtain the first filtrate comprises: mixing the pretreated filter residue with the solution of pyrophosphatic acid, and after a first reaction time at a first reaction temperature, performing a first solid-liquid separation treatment to obtain the first filtrate; and/or
the step of mixing the first filtrate with the precipitant to obtain the second filtrate comprises: mixing the first filtrate with the precipitant, and after a second reaction time at a second reaction temperature, performing a second solid-liquid separation treatment to obtain the second filtrate; and/or
the step of mixing the second filtrate with the pH regulator, the ferrous iron source, and the oxidant to obtain the third filtrate and the third filter residue comprises: mixing the second filtrate with the pH regulator, the ferrous iron source, and the oxidant, and after reaching an endpoint pH value of a third reaction and then a third reaction time, performing a third solid-liquid separation treatment to obtain the third filtrate and the third filter residue; and/or
the step of the adsorption treatment comprises: using an ion exchange resin to perform the adsorption treatment to the third filtrate.

6. The preparation method for the cathode material according to claim 5, wherein
a mass ratio of the alkaline agent to the discarded lithium iron phosphate cathode material is (3-5):1;
a ratio of an amount of substance of phosphate to pyrophosphate in the first filtrate is 1:(0.45-0.49);
a ratio of an amount of substance of the precipitant to a total amount of substance of nickel ions, cobalt ions, copper ions, and zinc ions in the first filtrate is (1.2-1.5):1;
a ratio of an amount of substance of iron element in the ferrous iron source to an amount of substance of pyrophosphate in the second filtrate is (0.95-0.98):1; and
a ratio of an amount of substance of Na, Fe, P, and F in the mixed slurry is (5.02-5.05):3:(4.02-4.05):(1.01-1.05).

7. The preparation method for the cathode material according to claim 6, wherein
a concentration of the alkaline agent is 3 mol/L-5 mol/L;
a concentration of the solution of pyrophosphatic acid is 3 mol/L-5 mol/L;
a mass fraction of Al element in the pretreated filter residue is less than 0.1%; and
a Li⁺ concentration in the adsorption residual solution is less than 100 ppm.

8. The preparation method for the cathode material according to any one of claims 5 to 7, wherein
the first reaction temperature is 70°C-90°C, and the first reaction time is 1 h-2 h;
the second reaction temperature is 40°C-60°C, and the second reaction time is 30 min-60 min;
the endpoint pH value of the third reaction is 2.8-3.2, and the third reaction time is 30 min-60 min; and
a temperature for the calcination is 550°C-650°C, and a temperature-holding time for the calcination is 10 h-13 h.

9. The preparation method for the cathode material according to any one of claims 5 to 7, wherein
the alkaline agent is a sodium hydroxide solution;
the precipitant is selected from one or more of sodium sulfide, sodium hydrogen sulfide, and sodium N,N-dimethyldithiocarbamate;
the pH regulator is selected from one or more of sodium hydroxide, ammonia water, ammonium bicarbonate, and ammonium carbonate;
the ferrous iron source is selected from one or more of ferrous acetate, ferrous citrate, and ferrous gluconate; and
the oxidant is selected from one or more of hydrogen peroxide, oxygen, and ozone.

10. A cathode sheet, wherein the cathode sheet comprises the cathode material according to any one of claims 1 to 3, or the cathode material prepared by the preparation method for the cathode material according to any one of claims 4 to 9.

11. A sodium ion battery, wherein the sodium ion battery comprises the cathode sheet according to claim 10.
